# EUROPEAN PATENT APPLICATION

(11) **EP 1 176 749 A2**
(43) Date of publication of application: **30.01.2002**
(21) Application number: 01114675.0
(22) Date of filing: 19.06.2001
(51) Int. Cl.: H04L 1/08, H04L 1/00

(54) **Radio communication system**

(30) Priority: 20.06.2000 JP 2000184183
(71) Applicant: MATSUSHITA ELECTRIC INDUSTRIAL CO., LTD., Kadoma-shi, Osaka 571-8501 (JP)
(72) Inventor: Abe, Katsuaki, Kawasaki-shi, Kanagawa 215-0005 (JP); Orihashi, Masayuki, Ichikawa-shi, Chiba 272-0001 (JP); Msuya, Job Cleopa, Yokosuka-shi, Kanagawa 230-0847 (JP)
(74) Representative: Grünecker, Kinkeldey, Stockmair & Schwanhäusser Anwaltssozietät

(57) **Abstract**

Transmitting apparatus 101 performs transmission processing on a general timeslot, while transmitting sub-data using a sub-timeslot for communication quality improvement. When a receiving process is failed on the general timeslot, receiving apparatus 102 receives the sub-timeslot, combines a received result on the sub-timeslot with the received result on the general timeslot to re-decode, and thereby reduces reception errors. Examples used as the sub-data are data deleted by puncture processing in transmission-coding and data of a bit that is known already to obviously have a poor received characteristic in using an M-ary modulation, etc.

## Description

### BACKGROUND OF THE INVENTION

### Field of the Invention

The present invention relates to a radio communication system with radio communications mainly performed between a transmitting apparatus and receiving apparatus.

### Description of the Related Art

Recently increased radio communication demands have promoted the increase in the communication data rate in a radio communication system. However, increasing the communication data rate generally results in the increase in the commutation error rate and deterioration of the communication quality. Therefore, in order to improve the communication quality, various techniques have been used. One of such techniques is a diversity technique.

The technique is such a technique that transmits and receives the same burst data using a plurality of separated diversity branches. For example, in the time diversity, a transmitter transmits the same burst data repeatedly a plurality of timewise separated times, and a receiver side combines the received results of the plurality of times and thereby improves the received quality.

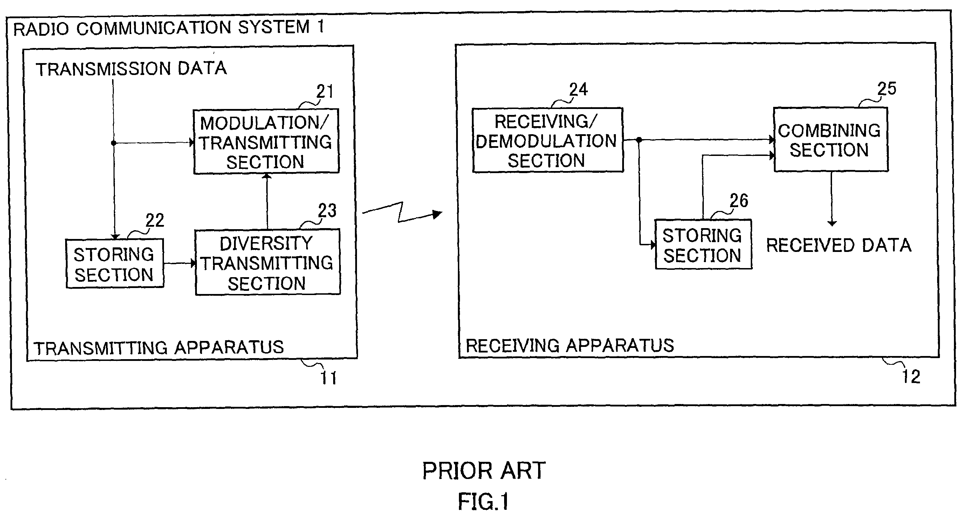

With reference to FIG.1, the configuration and operation of a conventional time diversity communication system will be described below briefly. In transmitting apparatus 11 in radio communication system 1 illustrated in FIG.1, transmission burst data is modulated and transmitted in modulation/transmitting section 21, while being stored in storing section 22. Diversity transmitting section 23 reads the burst data stored in storing section 22 after a predetermined period of time elapses to provide to modulation/transmitting section 21 which transmits the burst data again.

In receiving apparatus 12, receiving/demodulation section 24 receives and demodulates each signal of the burst data transmitted a plurality of times, and stores as a demodulated result, for example, a soft decision value in storing section 26. The stored soft decision values of a plurality of times are averaged in combining section 25, and thereby the effect due to a noise component is decreased and the communication quality is improved.

In this case, the communication quality is thus improved, however, the channel capacity decreases because the same burst data as that transmitted previously is retransmitted.

Further an example of another solving method for improving the communication quality is a retransmission method based on ARQ (Automatic Repeat Request). This is a method such that when a reception error is detected in receiving forward link signals, a repeat request is issued on return link, and in response to the request, the same burst data is transmitted on forward link. Also in this case, the entire burst data is retransmitted as it is in the retransmission even when part of the burst data is erroneous, whereby the channel capacity decreases.

### SUMMARY OF THE INVENTION

It is an object of the present invention to improve the communication quality while suppressing the increase in the redundancy of communication data amount to a small amount.

In order to achieve the object, in a radio communication system of the present invention, a transmitting apparatus and receiving apparatus perform communications in time division for each timeslot, in a communication frame format is provided a sub-timeslot for use in improving the communication quality of radio communication link as well as a general timeslot (hereinafter referred to as main-timeslot), the transmitting section retransmits on the sub-timeslot part of data transmitted on the main-timeslot, and the receiving section performs reception processing using both or either of the main-timeslot and the sub-timeslot.

According to the present invention, when a reception error occurs at the time of receiving the main-timeslot, the sub-timeslot is received to combine with the demodulated result of the main-timeslot, whereby it is possible to decrease reception errors.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is a block diagram illustrating a configuration of a conventional radio communication system;

FIG.2 is a block diagram illustrating a configuration of a radio communication system according to a first embodiment of the present invention;

FIG.3A is a diagram illustrating a frame format used in the radio communication system according to the first embodiment of the present invention;

FIG.3B is a diagram illustrating another frame format used in the radio communication system according to the first embodiment of the present invention;

FIG.3C is a diagram illustrating another frame format used in the radio communication system according to the first embodiment of the present invention;

FIG.4A is a diagram to explain processing on a transmitting side in the radio communication system according to the first embodiment of the present invention;

FIG.4B is a diagram to explain processing on a receiving side in the radio communication system according to the first embodiment of the present invention;

FIG.5 is a block diagram illustrating a configuration of a radio communication system according to a second embodiment of the present invention;

FIG.6 is a block diagram illustrating a configuration of a radio communication system according to a third embodiment of the present invention;

FIG. 7 is a diagram illustrating an example of a signal spatial diagram in a modulation system according to the third embodiment of the present invention;

FIG.8 is a block diagram illustrating a configuration of a radio communication system according to a fourth embodiment of the present invention;

FIG.9 is a diagram to explain frequency assignment in the radio communication system according to the fourth embodiment of the present invention; and

FIG.10 is a block diagram illustrating a configuration of a radio communication system according to a fifth embodiment of the present invention.

### DETAILED DESCRIPTION OF THE PREFERRED EMBODIMENTS

Embodiments of the present invention will be described below with reference to accompanying drawings.

### (First embodiment)

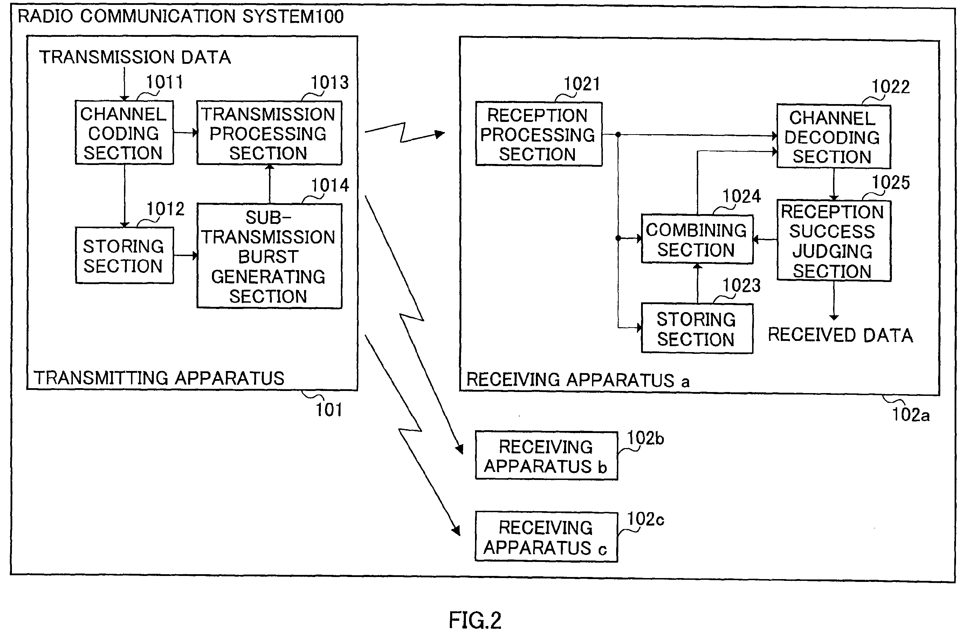

FIG.2 is a block diagram illustrating a configuration of a radio communication system according to the first embodiment of the present invention.

In radio communication system 100, transmitting apparatus 101 transmits radio signals of data to transmit, and has at least channel coding section 1011, storing section 1012, transmission processing section 1013 and sub-transmission burst generating section 1014.

Channel coding section 1011 performs on the data to transmit processing such as, for example, addition of error detecting code, convolutional coding, puncture processing and burst generation. In this embodiment, as an example, CRC parity code is added, the convolutional codingwithacodingrateofl/2andthepunctureprocessing of a puncturing rate of 3/4 is performed, and accordingly the coding with a total coding rate of 2/3 is performed except CRC.

Storing section 1012 stores the whole or part of a coded data sequence in a coding step in channel coding section 1011 to read out when necessary. In this embodiment, data deleted in the puncture processing is stored.

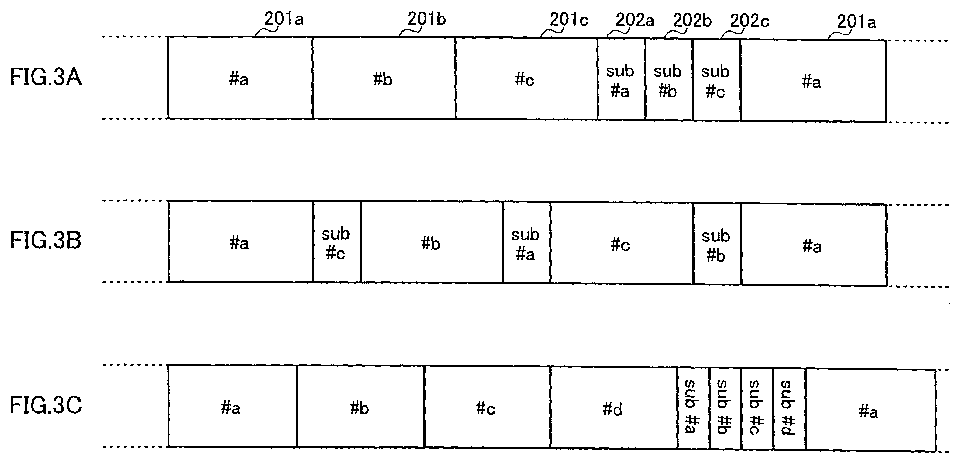

Transmission processing section 1013 performs modulation and transmission processing on the input data in accordance with the frame format as illustrated in FIG.3A, and the detailed operation thereof will be described later. Sub-transmission burst generating section 1014 generates a sub-transmission burst from the data stored in storing section 1012 to output.

In addition, other structure elements in transmitting apparatus 101 are not limited in particular in this embodiment.

Receiving apparatus 102a selects and receives a burst signal transmitted to the apparatus 102a to generate received data, and has at least reception processing section 1021, channel decoding section 1022, storing section 1023, combining section 1024 and reception success judging section 1025.

Reception processing section 1021 selects and receives the burst signal transmitted to the apparatus 102a from signals transmitted according the frame format as illustrated in FIG.3A to demodulate, and outputs the demodulated result. In this embodiment, as an example of the demodulated result, a soft decision value in the range of 0.0 to 1.0 is output. It is herein assumed that "0.0" is indicative of the highest likelihood of data "0", and "1.0" is indicative of the highest likelihood of data "1".

Channel decoding section 1022 extracts a coded data portion from the demodulated result of the received burst, for example, according to the system corresponding to channel coding section 1022, to perform depuncture processing, Viterbi decoding and error detecting processing.

Storing section 1023 stores the demodulated result. Combining section 1024 combines a plurality of demodulated results and outputs the combined result. Based on the result of error detecting processing in channel decoding section 1022, reception success judging section 1025 performs the control described below to the output of demodulated result, combining section 1024 and channel decoding section 1022.

A plurality of transmitting apparatuses and a plurality of receiving apparatuses may exit in radio communication system 100, however, a one-to-N communication performed between one transmitting apparatus and a plurality of receiving apparatuses (102a to 102c) is assumed in this embodiment.

In communications between transmitting apparatus 101 and receiving apparatus 102a, the communications are performed according to the frame format as illustrated in FIG.3A. In other words, a time division multiple access (TDMA) system with triple multiplex is assumed, where at a time, timeslot 201a is assigned to the communication between transmitting apparatus 101 and receiving apparatus 102a, timeslot 201b is assigned to the communication between transmitting apparatus 101 and receiving apparatus 102b, and timeslot 201c is assigned to the communication between transmitting apparatus 101 and receiving apparatus 102c. Hereinafter each of these timeslots is referred to as a main-timeslot.

Timeslot 202a is a timeslot assigned to assist to improve the quality of the communication between transmitting apparatus 101 and receiving apparatus 102a by timeslot 201a, and the length of timeslot 202a is assumed to be shorter than that of timeslot 201a. In this embodiment, as an example, the length of timeslot 202a is one-third that of the main-timeslot. Timeslots 202b and 202c are similarity used respectively corresponding to timeslots 101b and 101c. Hereinafter each of these timeslots is referred to as a sub-timeslot.

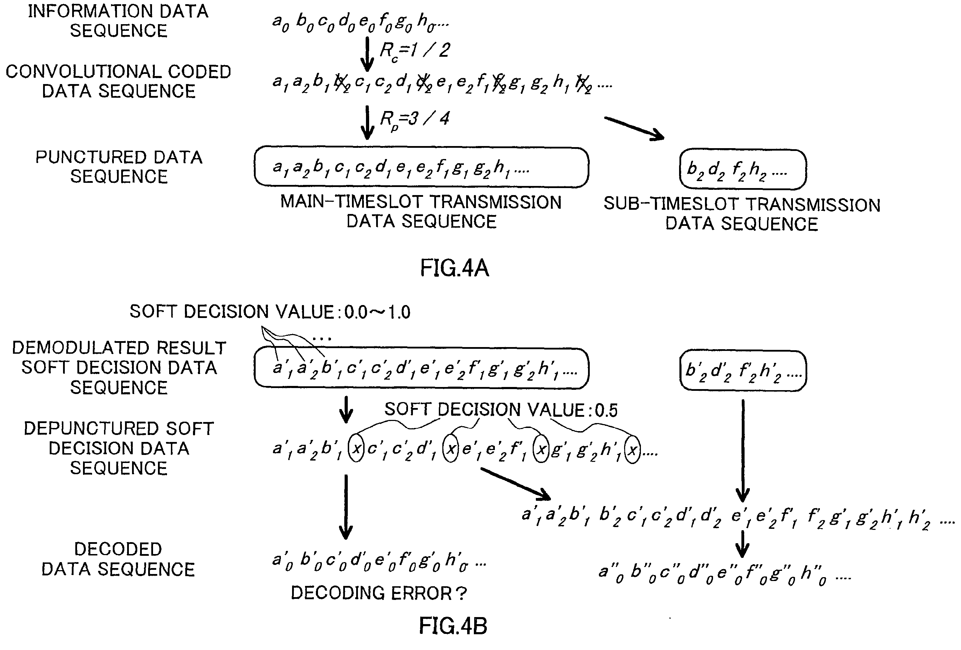

With reference to FIGs.4A and 4B, explanations are given below of a sub-transmission method using the sub-timeslot and of procedures of improving the received quality in receiving apparatus 102a in the radio communication system configured as described above.

With respect to a data sequence {a0, b0, c0, d0, e0, f0, g0, h0, ...} to be transmitted to receiving apparatus 102a, as illustrated in FIG.4A, channel coding section 1011 in transmitting apparatus 101 performs addition of error detecting code, convolutional coding, puncture processing and burst generation, and outputs thus generated burst data. (It is herein assumed that a0, b0, c0, ... each is indicative of bit data of "0" or "1".) A puncture processing section deletes 1/4 of input bits according to a predetermined scheme. The data {b2, d2, f2, h2} deleted by the puncture is stored in storing section 1012.

Transmission processing section 1013 modulates the burst data generated in channel coding section 1011 and transmits the resultant on main-timeslot 201a, based on the frame format illustrated in FIG.3A. Meanwhile, the data sequence stored in storing section 1012 is generated to a transmission burst on sub-timeslot 202a by sub-transmission burst generating section 1014, and is transmitted on sub-timeslot 202a by transmission processing section 1013.

In receiving apparatus 102a, as illustrated in FIG.4B, reception processing section 1021 receives and demodulates the signal on main-timeslot 202a assigned to the apparatus 102a, and outputs the demodulated result of a soft decision value sequence {a'1, a'2, b'1, c'1, c'2, d'1, e'1, e'2, f'1, g'1, g'2, h'1, ...}. The demodulated result is subjected to channel decoding processing in channel decoding section 1022, and the decoded data and error detected result are output to reception success judging section 1025. Meanwhile the demodulated result is stored in storing section 1023.

Reception success judging section 1025 outputs the decoded data as it is when an error is not detected as a result of the error detecting processing in channel decoding section 1022. When an error is detected, the section 1025 controls combining section 1024 and channel decoding section 1022 as described below. That is, combining section 1024 combines the received demodulated result of sub-timeslot 202a in reception processing section 1021, i.e., a portion {b'2, d'2, f'2, h'2, ...} of soft decision value corresponding to the data deleted in the puncture processing section and the received demodulated result of main-timeslot 201a stored in string section 1023, and thereby generates the soft decision value sequence of {a'1, a'2, b'1, b'2, c'1, c'2, d'1, d'2, e'1, e'2, f'1, f'2, g'1, g'2, h'1, h'2, ...}.

By the combining, portions of data is all interpolated which is deleted in the puncture processing at the channel coding stage in transmitting the main-timeslot. Channel decoding section 1022a performs Viterbi decoding on the combined result, and outputs the decoded data as received data.

As described above, according to this embodiment the present invention, even when the decoding using only the received demodulated result of main-timeslot 201a fails, the received demodulated result of the sub-timeslot is combined with that of the main-timeslot and the decoding is processed again, whereby it is possible to reduce decoding errors and to improve the communication quality. Further, by timewise separating the main-timeslot and sub-timeslot, under the fading environment, signals are obtained which have the low timewise correlation on the fading variation, whereby the communication quality improvement effect is also expected due to the time diversity effect.

In addition, the coding rate of each of the convolutional coding and puncture processing, and the number of multiple accesses in the TDMA system in this embodiment are indicated as examples, and other configurations using other values thereof may be adopted. Further, the assignment of timeslot is not limited to FIG.3A, and an assignment as illustrated in FIG.3B may be adopted.

Moreover, timeslots 202a to 202c for sub-transmission are fixedly assigned and transmitted every time, but are not limited to this case. For example, it may be possible that main-timeslots are only used ordinarily in a four timeslots multiplex TDMA system, while when the traffic is not occupied fully, one time slot is assigned to sub-timeslot transmission so as to have a configuration of triple TDMA and the sub-timeslot. In this case, information on whether the fourth timeslot is the main-timeslot or sub-timeslot may be multiplexed on the transmission information data to each terminal, or a control channel may be reserved separately and such information may be provided on the control channel.

Further, it may be possible to perform the burst reception of the sub-timeslot when an error is detected on the received demodulated result of the main-timeslot, or to perform such reception every time. It may be possible also to perform the combining every time.

Furthermore, in this embodiment, channel coding section 1011 and channel decoding section 1022 perform the convolutional coding / decoding and puncture processing / depuncture processing, and data deleted in the puncture processing is transmitted on the sub-timeslot, however, the present invention is not limited to the above case. For example, it may be possible that turbo coding is used instead of the convolutional coding and puncture processing, and that data deleted by the puncture processing in the turbo coding is transmitted.

In this case, it is preferable to measure the channel quality and to corresponding to the measured channel quality, switch adaptively the puncture rate in the puncture processing in the coding and the modulation system used in transmitting a sub-timeslot to control. It is thereby possible to perform the puncture processing and transmission of sub-timeslots corresponding to the change in the channel quality.

In this embodiment, a timeslot is assigned to each of respective sub-transmission bursts of three receiving apparatuses 102a, 102b and 102c, however, the present invention is not limited to the above case. For example, it may be possible that three sub-transmission bursts are gathered to one burst to be transmitted on one time slot with the same length as that of the main-timeslot, and that each receiving section receives and demodulates the timeslot, and extracts the sub-transmission data portion to the respective receiving apparatus to use in the combining, or it may be possible to compose a timeslot with the burst length obtained by combining data of the main-timeslot and of the sub-timeslot for a previous main-timeslot (to compose one timeslot with a new burst length composed of portions corresponding to the main-timeslot and to the sub-timeslot), where the main-timeslot and sub-timeslots have been assigned as different timeslots.

Further, it may be possible that only one timeslot is reserved as the sub-transmission timeslot, each of receiving apparatuses 102a, 102b and 102c has a section for uplink, and requests to transmit the sub-burst only when the reception error is detected, and corresponding to the request, the sub-burst is transmitted on the sub-timeslot.

### (Second embodiment)

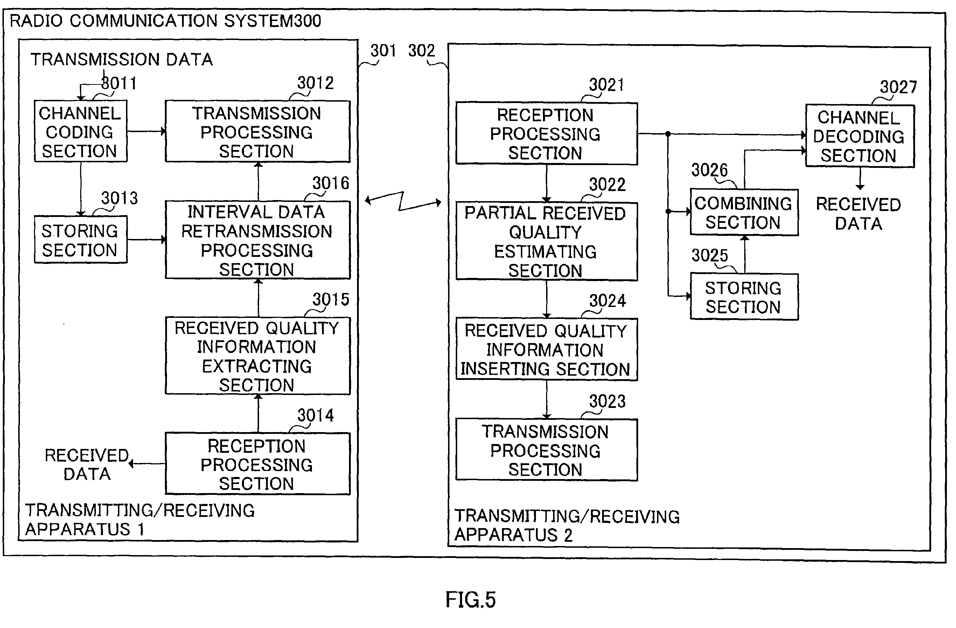

FIG.5 is a block diagram illustrating a configuration of a radio communication system according to the second embodiment of the present invention. Radio communication system 300 is such a system that enables bidirectional radio comminations, and is composed of a plurality of transmitting/receiving apparatuses, i.e., apparatuses 301 and 302, each provided with the transmitting/receiving function.

In this embodiment, a communication link from transmitting/receiving apparatus 301 to transmitting/receiving apparatus 302 is referred to as downlink, and a constitution is explained for improving the communication quality on downlink. Transmitting/receiving apparatus 301 has at least channel coding section 3011, transmission processing section 3012, storing section 3013, reception processing section 3014, received quality information extracting section 3015, and partial period data retransmission processing section 3016.

Channel coding section 3011 performs channel coding on data to be transmitted by a predetermined scheme to output. Transmission processing section 301 performs transmission processing on the input data in accordance with a predetermined frame format and modulation system. Storing section 3013 stores a coded data sequence to read out when necessary.

Reception processing section 3014 selects and receives a burst signal transmitted to the apparatus 301 in accordance with a predetermined coding scheme, frame format and modulation scheme to generate received data. Received quality information extracting section 3015 extracts a downlink received quality information from the received result in reception processing section 3014 . Based on the downlink received quality information, partial data retransmission processing section 3016 reads data of a partial with a poor received quality from storing section 3013, and based on the predetermined frame format and modulation scheme, generates a burst to be subjected to retransmission processing to provide to transmission processing section 3012.

Transmitting/receiving apparatus 302 has at least reception processing section 3021, partial received quality estimating section 3022, transmission processing section 3023, received quality information inserting section 3024, storing section 3025, combining section 3216 and channel decoding section 3027.

Reception processing section 3021 selects and receives a burst signal transmitted to the apparatus 302 from signals transmitted by the predetermined frame format to output a demodulated result. Partial received quality estimating section 3022 estimates a received quality for each partial period in a dowlink received burst and outputs an estimated result. In this embodiment, the section 3022 is composed of an RSSI measuring section that measures as a parameter indicative of the downlink received quality, an average received signal strength (RSSI: Received Signal Strength Indicator) of each of three partial period with a length of one-third of a received burst starting from the beginning.

Transmission processing section 3023 performs transmission processing on the input transmission data in accordance with a predetermined coding scheme, frame format and modulation scheme. Received quality information inserting section 3024 inserts the received quality estimated result of each partial period obtained in receiving the downlink burst into uplink transmission data to output. Storing section 3025 stores the received demodulated result of the downlink burst to read out when necessary.

Combining section 3026 combines corresponding portions of a previous received demodulated result read from storing section 3025 and of the received demodulated result output from reception processing section 3021 to output a combined result. In this embodiment, the section 3026 combines the corresponding portion of soft decision values of the received demodulated result in receiving the previous main-timeslot and of the received demodulated result of the partially-retransmitted burst. Channel decoding section 3027 performs channel decoding using the input received demodulated result, and outputs the decoded result as received data.

In this embodiment, the predetermined coding scheme, frame format and modulation scheme explained in the above-mentioned constitution are not limited in particular. As an example, as the frame format on a downlink, the format in FIG.3 used in the first embodiment is assumed to be used. It is not necessary to use the same coding scheme, frame format and modulation scheme on downlink and uplink. In this embodiment, as an example, it is assumed to set the modulation scheme on uplink to be a system providing a lower bit rate and higher robustness against error than that on downlink.

A method will be described below of partially retransmitting a transmission signal on downlink to improve the communication quality in the radio communication system configured as described above.

In transmitting/receiving apparatus 301, channel coding section 3011 performs channel coding on data to be transmitted to transmitting/receiving apparatus 302, and transmission processing section 3012 modulates the data and transmits the resultant on timeslot 201a in the frame format illustrated in FIG.3. Meanwhile, the channel-coded data is stored in storing section 3013. In transmitting/receiving apparatus 302, reception processing section 3021 selects and receives the signal on timeslot 201a transmitted from transmitting/receiving apparatus 301 and outputs the demodulated result. The demodulated result is subjected to channel decoding in channel decoding section 3027, while being stored in storing section 3025.

Partial received quality estimating section 3022 measures the average received signal strength of each one-third-burst interval with respect to each downlink received burst. The measured result is inserted into uplink transmission data in received quality information inserting section 3025, and is transmitted on uplink with the transmission data from transmission processing section 3023. In transmitting/receiving apparatus 301, reception processing section 3014 performs reception processing on the uplink transmission burst signal from transmitting/receiving apparatus 302, and from the processed data, received quality information extracting section 3015 extracts the average received signal strength information for each partial period in the burst received on downlink.

Based on the obtained average received signal strength information for each partial period, partial period data retransmission processing section 3016 reads coded data of an interval with the lowest average received signal strength from storing section 3013 to compose a predetermined burst structure, and provides the burst to transmission processing section 3012, which retransmits the burst on timeslot 202a in FIG.3, thereby performing the partial retransmission. In transmitting/receiving apparatus 302, reception processing section 3021 receives and demodulates the retransmitted burst, combining section 3026 combines corresponding portions of the demodulated result and of the demodulated result of timeslot 201a stored previously, and channel decoding section 3027 performs channel decoding on the combined result.

As described above, according to this embodiment of the present invention, a measured result is reported on uplink of the average received signal strength for each partial interval in a received burst in receiving the downlink signal, and based on the information, data of an interval with a lower signal strength is retransmitted, thereby performing the partial retransmission, whereby it is possible to improve the communication quality on downlink.

In addition, this embodiment adopts the constitution where as received quality information, the average received signal strength for each interval with the one-third burst length and the measured result for each interval is transmitted on uplink, however, the length of an interval to measure and how to transmit information on uplink are not limited to the above constitution. For example, it may be possible to transmit position information of a partial period providing the lowest value in the measured average received signal strength result, in transmitting uplink signals.

In this embodiment, partial received quality estimating section 3022 measures RSSI for each interval of a received signal, but is not limited to this measurement. For example, it may be possible to measure an average value of a carrier to noise ratio (CNR) for each partial period of a received burst. In the case where channel decoding section performs Viterbi decoding, it may be possible to perform soft output processing in the Viterbi decoding, and to based on the soft output value, measure likelihood as a received quality information for each period.

Further, this embodiment adopts the constitution where the received quality is measured for each interval in a received burst and is transmitted on uplink, but is not limited to the above constitution. For example, it may be possible to perform partial transmission and reception combining only when the channel decoding in channel decoding section 3027 is not performed correctly in receiving main-timeslot 201a. In this case, it may be further possible to use a signal indicative of, for example, repeat request, as well as the partial received quality information in transmitting uplink signals.

Furthermore, it may be possible to insert the operation in the received quality information inserting section in this embodiment in generating transmission data in the upper layer processing.

### (Third embodiment)

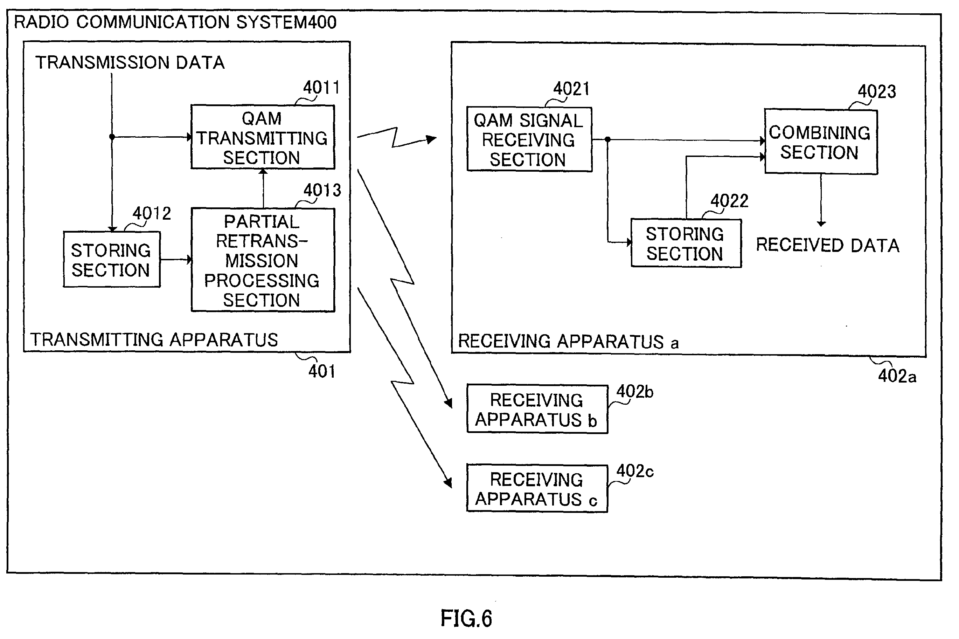

FIG.6 is a block diagram illustrating a configuration of a radio communication system according to a third embodiment of the present invention.

Radio communication system 400 is such a system that enables radio communications by M-ary modulation scheme, and is composed of a plurality of transmitting apparatuses 401 and receiving apparatuses 402.

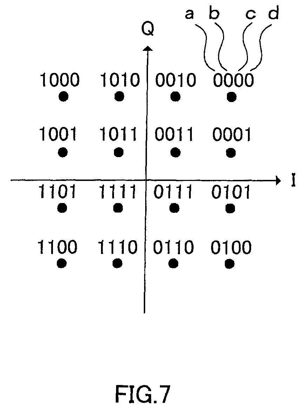

Transmitting apparatus 401 performs the M-ary modulation on transmission data and further performs the transmission and partial retransmission in accordance with a predetermined frame format, and at least has quadrature amplitude modulation (QAM) transmitting section 4011, storing section 4012 and partial retransmission processing section 4013. QAM transmitting section 4011 performs the quadrature amplitude modulation on transmission data and performs the transmission and partial retransmission in accordance with a predetermined frame format, and it is assumed in this embodiment that as an example of the quadrature amplitude modulation, the 16QAM system is used, and that signal points thereof are arranged every 4 data bits according to the gray coding as illustrated in FIG.7.

It is further assumed that according to, as the predetermined frame format, the frame format illustrated in FIG.3C, the transmission of the main-timeslot and partial retransmission of the sub-timeslot are performed, which will be described specifically below.

Storing section 4012 stores transmission data to read out when necessary. Partial retransmission processing section 4013 extracts specific data from the transmission data stored in storing section 4012 to be partial-retransmitted, to provide to QAM transmitting section 4011, and the details of the extracted data and retransmission timing will be described later.

Receiving apparatus 402 selects and receives in accordance with the predetermined frame format a QAM signal transmitted from transmitting apparatus 401, and has at least QAM signal receiving section 4021, storing section 4022 and combining section 4023. QAM signal receiving section 4021 receives and demodulates a 16QAM signal transmitted to the apparatus 402 in accordance with the frame format illustrated in FIG.3C, while receiving signals on main-timeslots and sub-timeslots.

Storing section 4022 stores the received demodulated results of main-timeslots in QAM signal receiving section 4021, and in this embodiment, is assumed to store soft decision values for each bit of the received demodulated result. Combining section 4023 combines corresponding portions of the received demodulated result output from QAM signal receiving section 4021 and of the received demodulated result stored in storing section 4022, and the details will be described later.

Other structure elements in transmitting apparatus 401 and receiving apparatus 402 are not limited in particular in this embodiment. For example, whether to perform channel coding and channel decoding respectively on transmission data and received data is not limited.

The explanations are given below of a method of sub-transmission using a sub-timeslot and of procedures for improving the received quality in receiving apparatus 402 in the radio communication system configured as described above.

In transmitting apparatus 401, QAM transmitting section 4011 performs 16QAM on transmission data, and transmits the resultant on main-timeslot 203a, while the transmission data is stored in storing section 4012. It is generally known in the 16QAM system that a reception error rate of specific bits in the QAM symbol is poorer than the other bits. That is, in the case of the constellation as illustrated in FIG.7, bits c and d are relatively poor in reception error rate as compared to bits a and b because the distance between the signal points is short on average.

Partial retransmission processing section 4013 extracts only bit data used as the bit c in arranging signal mapping on 16QAM among data already transmitted on the main-timeslot stored in storing section 4012 to provide to QAM transmitting section 4011, which performs QAM on the bit data to transmit on sub-timeslot 204a.

In receiving apparatus 402, QAM signal receiving section 4021 receives and demodulates the QAM signal transmitted on main-timeslot 203a from transmitting apparatus 401, and stores soft decision values of the demodulated result in storing section 4022. Then, the section 4021 receives and demodulates the QAM signal transmitted on sub-timeslot 204c from transmitting apparatus 401, and outputs soft decision values of the demodulated result.

Combining section 4023 combines corresponding portions of soft decision values of the demodulated result of the main-timeslot stored in storing section 4022 and soft decision values of the demodulated result of the sub-timeslot output from QAM signal receiving section 4021. Specifically, with respect to soft decision values of the demodulated result of the main-timeslot, positions corresponding to bits a, b and d in FIG.7 are output as they are, while as a position corresponding to the bit c, an averaged value is output with the soft decision value of a corresponding position in the demodulated result of the sub-timeslot.

As described above, according to this embodiment of the present invention, data of a position of a bit is partially-retransmitted which is already known to obviously have a relatively poor reception error rate characteristic, to be combined in a receiving section, whereby it is possible to improve the communication quality.

In addition, this embodiment adopts the constitution where only data of a position of the bit c in the constellation of 16QAM signals is retransmitted, but is not limited to this constitution. For example, it may be possible to retransmit data on a position of the bit d, or to retransmit respective parts of data on the bits c and d. Further, if it is possible to reserve twice of the sub-timeslot length, it may be possible to retransmit both the data on bits c and d.

Moreover, the M-ary modulation scheme is not limited to the 16QAM, and as long as a constellation is obtained by Gray coding, for example, it may be possible to use other M-ary modulation schemes such as 8QPSK and 64QAM.

Further, this embodiment uses 16QAM on main-timeslots and sub-timeslots, but is not limited to this case. It may be possible to use different modulation schemes on main-timeslots and sub-timeslots. For example, it may be possible to use QAM on main-timeslots and PSK on sub-timeslots, or in contrast thereto, it may be possible to use PSK on main-timeslots and QAM on sub-timeslots.

### (Fourth embodiment)

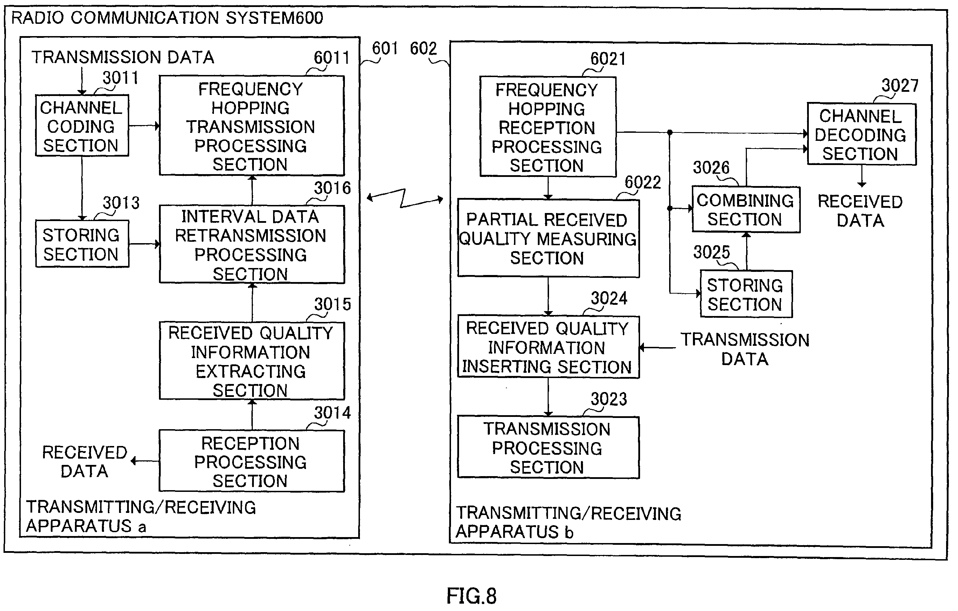

FIG.8 is a block diagram illustrating a configuration of a radio communication system according to the fourth embodiment of the present invention.

Radio communication system 600 is such a system that enables radio communications by the Frequency Hopping system.

In FIG.8, the configuration is the same as that in FIG.5 except that Frequency Hopping transmission processing section 6011 is provided instead of transmission processing section 3012 in transmitting apparatus 301, and that Frequency Hopping reception processing section 6021 and partial received quality measuring section 6022 are provided respectively instead of reception processing section 3021 and partial received quality estimating section 3022 in receiving apparatus 302, and the same sections as in FIG.5 are assigned the same reference numerals as in FIG.5 to omit the detailed explanation thereof.

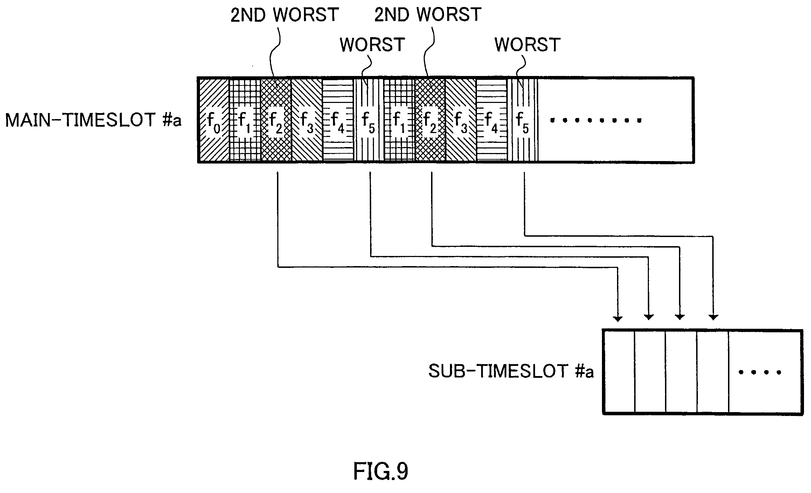

Frequency Hopping transmission processing section 6011 performs transmission processing on input data in accordance with a predetermined frame format and modulation scheme, and in this embodiment as an example, performs a low-rate Frequency Hopping where the Frequency Hopping as illustrated in FIG.9 is performed by a rate the same or lower as/than the symbol rate with 6 kinds of carrier frequencies in transmitting modulated signals.

Frequency Hopping reception processing section 6021 selects, receives and demodulates a signal transmitted to the apparatus 301 in accordance with a predetermined coding system, frame format and modulation scheme to output the demodulated result, and is assumed in this embodiment to perform reception/demodulation corresponding to the modulation scheme and low-rate Frequency Hopping system the same as used in Frequency Hopping transmission processing section 6011. Partial received quality measuring section 6022 estimates the received quality in a received burst for each carrier frequency used in the Frequency Hopping and outputs the estimated result. In this embodiment, the section 6022 is composed of an RSSI measuring section that measures an average received signal strength (RSSI: Received Signal Strength Indicator) for each carrier frequency period as a parameter indicative of the received quality.

Other structure and operation in this embodiment are the same as in FIG.5. Further, in this embodiment, the predetermined coding scheme and frame format are not limited in particular, and as an example, a frame format on a downlink side is assumed to be the format in FIG.3A used in the first embodiment. Furthermore, it is not necessary to use the same coding scheme, frame format and modulation scheme on downlink and uplink. In this embodiment, as an example, it is assumed to set the modulation scheme on uplink to be a system providing a lower rate and higher error resistance than that on downlink.

A method will be described below of partially retransmitting a transmission signal on downlink to improve the communication quality in the radio communication system configured as described above.

In transmitting/receiving apparatus 601, channel coding section 3011 performs channel coding on data to be transmitted to transmitting/receiving apparatus 602, and Frequency Hopping transmission processing section 6011 generates a transmission burst to transmit on timeslot 201a in the frame format illustrated in FIG.3A, modulates the burst data, and then performs Frequency Hopping on the modulated data as illustrated in FIG.9 to transmit. Meanwhile, the channel-coded data is stored in storing section 3013.

In transmitting/receiving apparatus 602, Frequency Hopping reception processing section 6021 selects and receives a signal on timeslot 201a transmitted from transmitting/receiving apparatus 601 and outputs the demodulated result. The demodulated result is subjected to channel decoding in channel decoding section 3027, while being stored in storing section 3025. With respect to the received burst, partial received quality measuring section 6022 measures the average received signal strength for each carrier frequency period used in the Frequency Hopping. The measured result is inserted into uplink transmission data in received quality information inserting section 3024, and is transmitted on uplink with the transmission data from transmission processing section 3023.

In transmitting/receiving apparatus 601, reception processing section 3014 performs reception processing on the uplink transmission signal from transmitting/receiving apparatus 602, and from the processed data, received quality information extracting section 3015 extracts the average received signal strength information for each carrier frequency measured at the time of downlink reception. Based on the obtained average received signal strength information for each carrier frequency, partial period data retransmission processing section 3016 reads out coded data of portions transmitted with two worst carrier frequencies of average received signal strength from storing section 3013. For example, the section 3016 reads out partial period of data which was transmitted by frequencies f2 and f5 in Frequency Hopping in FIG.9.

With respect to the readout data sequence, the section 3016 generates a burst, and provides the resultant to Frequency Hopping transmission processing section 6011, which partially-retransmits the burst on timeslot 202a in FIG.3. In transmitting/receiving apparatus 602, reception processing section 6021 demodulates the retransmitted burst, combining section 3026 combines corresponding portions of the demodulated result and of the demodulated result of timeslot 201a stored previously, and channel decoding section 3027 performs channel decoding on the combined result.

As described above, according to this embodiment of the present invention, in a radio communication system where downlink communications are performed by Frequency Hopping, an estimated result is reported on uplink of the average received signal strength for each carrier frequency used in Frequency Hopping at the time of downlink reception, and based on the information, data of a portion transmitted with a carrier frequency providing a lower signal strength is retransmitted, whereby it is possible to improve the communication quality on downlink.

In this embodiment, with respect to a burst subjected to the partial retransmission by sub-timeslot 202a, whether to perform Frequency Hopping on such a burst is not limited. When the burst is transmitted without being subjected to Frequency Hopping, it may be possible to perform the partial retransmission without using a carrier frequency that provides a poor received quality on downlink.

In this embodiment, the case is explained that Frequency Hopping is performed using six carrier frequencies, and that the partial transmission is performed to portions of two worst carrier frequencies in received signal strength, however, set values are not limited to the above case.

### (Fifth embodiment)

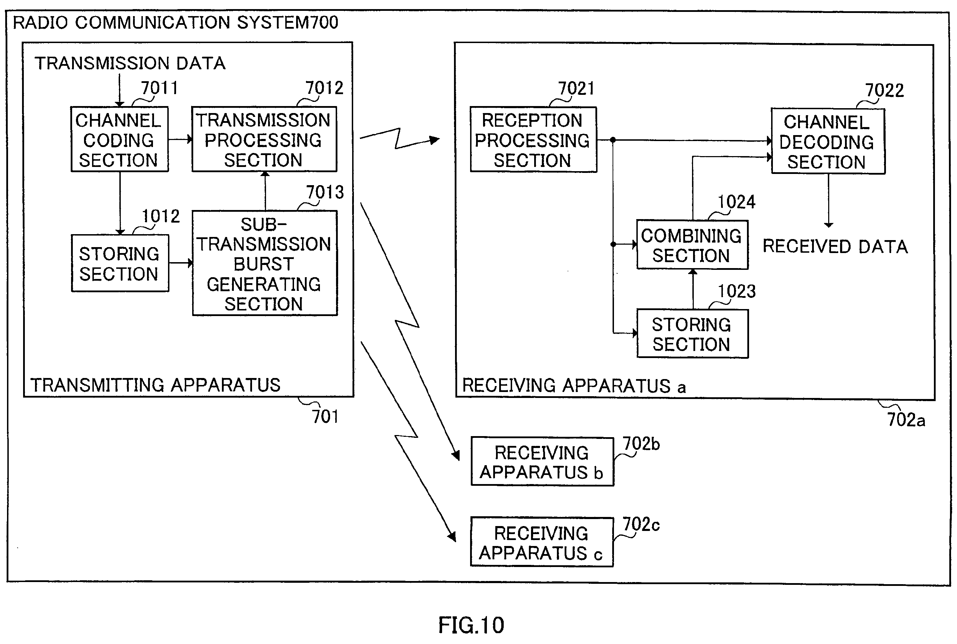

FIG.10 is a block diagram illustrating a configuration of a radio communication system according to the fifth embodiment of the present invention.

In FIG.10, the configuration is the same as that in FIG.2 except that channel coding section 7011, transmission processing section 7012 and sub-transmission burst generating section 7013 are provided respectively instead of channel coding section 1011, transmission processing section 1013 and sub-transmission burst generating section 1014 in radio communication system 101, and that reception processing section 7021, channel decoding section 7022 are provided respectively instead of reception processing section 1021 and channel decoding section 1022 in receiving apparatus 102, and the same sections as in FIG.2 are assigned the same reference numerals as in FIG.2 to omit detailed explanation thereof.

Channel coding section 7011 performs, as channel coding section 1011 in FIG.2, processing such as addition of error detecting code, convolutional coding, puncture processing and burst generation, and is assumed to perform the puncture processing with a puncture rate of 6/7, which is different from channel coding section 1011. Transmission processing section 7012 performs modulation/transmission processing on the input data in accordance with, for example, the frame format as illustrated in FIG.3A, and uses different modulation schemes on main-timeslots and sub-timeslots.

In this embodiment, as an example, 16QAM is used on main-timeslots 201a, 201b and 201c, and QPSK is used on sub-timeslots 202a, 202b and 202c. Sub-transmission burst generating section 7013 generates a sub-transmission burst from the coded data stored in storing section 1012 to output. The data for the sub-transmission is composed of data items one-sixth the data items transmitted on the main-timeslot.

Reception processing section 7021 selects, receives, and demodulates a signal transmitted to the apparatus 702 from signals transmitted according the frame format as illustrated in FIG.3A, and outputs the demodulated result. At this point, the section 7021 receives and demodulates signals transmitted on the maim-timeslot and sub-timeslots by different modulation schemes. In this embodiment, in response to transmission processing section 7011, the section 7021 receives and demodulates signals of 16QAM on the main-timeslot and of QPSK on sub-timeslot. Channel decoding section 7022 extracts a coded data portion from the received burst according to the system corresponding to channel coding section 7011 to perform the depuncture processing, Viterbi decoding and error detecting processing. The other structure and operation in FIG.10 are the same as those in FIG.2.

In the radio communication system configured as described above, the sub-transmission method using the sub-timeslot and procedures of improving the received quality in receiving apparatus 702 are basically the same as those in the first embodiment, and parts different from the first embodiment will be explained below.

Data to be transmitted from transmitting apparatus 701 to receiving apparatus 702a using main-timeslot 201a is modulated by 16QAM and transmitted, while data punctured in performing the puncture processing is stored in storing section 1012. The stored data is read out by sub-transmission burst generating section 7013 in generating a burst to be transmitted on sub-timeslot 202a. The data to be transmitted on sub-timeslot 202a is transmitted by QPSK.

In receiving apparatus 702a, a signal on main-timeslot 201a is received and demodulated, and is subjected to channel decoding in channel decoding section 7022. Meanwhile, the demodulated result is stored in storing section 1023. Reception processing section 7021 receives and demodulates the QPSK signal transmitted on sub-timeslot 202a. The demodulated result, in other words, a portion corresponding to data deleted in the puncture in the channel coding at the time of transmission is combined in combining section 1024 with the received demodulated result of main-timeslot 201a stored in storing section 1023. Channel decoding section 7022 performs Viterbi decoding on the combined result, and outputs the decoded data as received data.

As described above, according to this embodiment of the present invention, even when the decoding using only the demodulated result on main-timeslot 201a fails, the demodulated result is combined with the demodulated result on the sub-timeslot and the decoding is performed again, whereby it is possible to reduce decoding errors and to improve the communication quality. At this stage, since a signal of a retransmitting portion is subjected to the QPSK system that provides higher received sensitivity characteristic than the modulation scheme used in transmitting the main-timeslot, it is expected to provide higher received quality improvement effect.

In addition, this embodiment has the constitution where as an example of using different modulation schemes on main-timeslots and sub-timeslots, 16QAM is used on main-timeslots and QPSK is used on sub-timeslots, but, is not limited to the above constitution. In contrast thereto, it may be possible to increase the modulation level in the modulation scheme on sub-timeslots so as to relatively increase the number of data items to be transmitted on sub-timeslots. For example, when the ratio of the main-timeslot length to the sub-timeslot length is maintained at 3:1, it may be possible to set the puncture rate in the puncture processing in channel decoding section 7011 to 3/5, and to use QPSK on main-timeslots and 16QAM on sub-timeslots.

Further, it may be possible to adaptively switch the puncture rate in the puncture processing in channel decoding section 7011 and the modulation schemes on main-timeslots and sub-timeslots corresponding to the quality on communication link. For example, it may be possible to set the modulation scheme on main-timeslots to 16QAM, and to corresponding to the quality on communication link, adaptively switch a combination of the puncture rate and modulation scheme on the sub-timeslot between three combinations, i.e., (9/10, QPSK), (9/11, 16QAM) and (3/4, 64QAM). In this case, the control method and procedure for switching the puncture rate and modulation scheme is not limited in particular. For example, it may be possible to insert a specific identification pilot signal into a timeslot, and to by identifying the signal, recognize the puncture rate and modulation scheme, or such control information may be inserted into data to be transmitted on a main-timeslot.

Furthermore, this embodiment is indicative of the case where the method of using different modulation schemes on main-timeslots and sub-timeslots is applied to the first embodiment, but is not limited to the above case. It is easily anticipated that the method is applied to any one of the second to fourth embodiments.

A radio communication system of the present invention is a radio communication system where a transmitting section and receiving section perform radio communications in time division for each timeslot, in a communication frame format is provided a sub-timeslot for use in improving the communication quality of radio communication link as well as a main-timeslot, the transmitting section retransmits on the sub-timeslot part of data transmitted on the main-timeslot, and the receiving section performs reception processing using both or either of the main-timeslot and the sub-timeslot.

In the radio communication system of the present invention, in the above configuration, data to be transmitted on the main-timeslot is subjected to puncture processing in coding, and the whole or part of data deleted in the puncture processing is transmitted on the sum-timeslot.

In the radio communication system of the present invention, in the above configuration, data to be transmitted on the main-timeslot is subjected to turbo processing in coding, and the whole or part of data deleted in the turbo processing is transmitted on the sum-timeslot.

In the radio communication system of the present invention in the above configuration are provided as the transmitting section, a channel coding section that performs channel coding on data to be transmitted, a transmission processing section that modulates and transmits the data coded in the channel coding section and sub-transmission data according to a predetermined frame format, a first storing section that stores the whole or part of a coded data sequence generated at a step of the channel coding, and a sub-transmission burst generating section which reads out the data stored in the first storing section, and which generates sub-transmission burst data to output as sub-transmission data.

In the radio communication system of the present invention in the above configuration are provided as the receiving section, a reception processing section which selects, receives, and demodulates signals on a main-timeslot and sub-timeslot transmitted to the receiving section from signals transmitted according to the predetermined frame format and which outputs the demodulated result, a channel decoding section that performs channel decoding on the demodulated result output from the reception processing section to output decoded data, a second storing section that stores the demodulated result on the main-timeslot output from the reception processing section, and a combining section which combines the demodulated result on the sub-timeslot output from the reception processing section and a corresponding portion of the demodulated result on the main-timeslot stored in the second storing section, and which provides the combined result as the demodulated result to the channel decoding section.

In a radio communication system of the present invention in the above configuration are provided a plurality of transmitting/receiving sections each with the both functions instead of the transmitting section and receiving section. It is thereby possible for the transmitting/receiving apparatuses to perform bidirectional radio communications.

A radio communication system of the present invention provides a first transmitting/receiving section with a partial received quality estimating section that estimates the communication quality for each partial period in a received burst in receiving a signal of the main-timeslot transmitted to the first section, and with a received quality information inserting section that inserts as received quality information, the estimated result estimated in the partial received quality estimating section into the transmission data, and further provides a second transmitting/receiving apparatus with a received quality information extracting section that extracts the received quality information from the data transmitted from the first transmitting/receiving section to output, and with an interval data retransmission processing section which, based on the received quality information, retransmits data of an interval providing a poor received quality on sub-timeslot. It is thereby to measure the received quality at the time of reception for each partial period in the burst to report on return link, and to based on the measured information, retransmit only the partial period of the burst data which a poor received quality has been provided.

In the radio communication system of the present invention in the above configuration is provided an interval average received power measuring section as the partial received quality estimating section. It is thereby possible to measure, as the received quality information, the average received power for each partial period in the received burst.

In the radio communication system of the present invention in the above configuration is provided a partial CNR measuring section as the partial received quality estimating section in the radio communication system. It is thereby to measure, as the received quality information, the average CNR (carrier to noise ratio) for each partial period in the received burst.

The radio communication system of the present invention in the above configuration provides the first transmitting/receiving apparatus with a Viterbi processing section that outputs a demodulated result or decoded result by Viterbi soft output algorithm, and with an partial likelihood measuring section as the partial received quality estimating section. It is thereby possible to measure, as the received quality information, the likelihood for each partial period in the received burst by a soft output value output from the Viterbi processing section.

In the radio communication system of the present invention, in the above configuration, data to be retransmitted for communication quality improvement is assigned to one timeslot with the data to be retransmitted to other users (FIG.3A and FIG.3C).

In the radio communication system of the present invention, in the above configuration, a timeslot with a new burst length is composed by combining portions corresponding to the main-timeslot and to the sub-timeslot.

The radio communication system of the present invention in the above configuration uses an M-ary modulation scheme as the modulation used in communications, and retransmits on the sub-timeslot data assigned to a bit that is known already to obviously have poor communication performance in the constellation in the M-ary modulation scheme.

In the radio communication system of the present invention, in the above configuration, the quadrature amplitude modulation (QAM) scheme is used as the M-ary modulation scheme.

In the radio communication system of the present invention, in the above configuration, the modulation scheme used in communicating main-timeslots is different from that used in communicating sub-timeslots.

In the radio communication system of the present invention, in the above configuration, QAM is used in communicating main-timeslots, while PSK is used in communicating sub-timeslots.

In the radio communication system of the present invention, in the above configuration, PSK is used in communicating main-timeslots, while QAM is used in communicating sub-timeslots.

In the radio communication system of the present invention, in the above configuration, the retransmission by sub-timeslot is performed every time after the transmission by main-timeslot is finished.

The radio communication system of the present invention in the above configuration provides the first transmitting/receiving apparatus with a repeat request section that transmits a repeat request using the transmitting section when the reception in receiving section fails. It is thereby possible that the second transmitting/receiving apparatus performs the partial retransmission by sub-timeslot only when the first transmitting/receiving apparatus requests the retransmission.

The radio communication system of the present invention in the above configuration provides the receiving section with a reception success judging section that judges whether or not the reception on the main-timeslot is succeeded. It is thereby possible to receive the sub-timeslot only when the reception success judged result is indicative of reception failure, and to perform reception processing using the burst data in the reception failure and the burst data received on the sub-timeslot.

The radio communication system of the present invention in the above configuration provides the transmitting section with a traffic amount measuring section that measures a traffic amount of the system. It is thereby possible to perform the retransmission by sub-timeslot only when the measured traffic amount is small, and to perform high efficient communications.

The radio communication system of the present invention in the above configuration sets the radio communication system for a system using the Frequency Hopping system for communications between transmitting/receiving apparatuses, in which is provided, as the partial received quality estimating section in the first receiving/transmitting apparatus, an each-Hopping-Frequency received quality estimating section that estimates the received quality for each period of the carrier frequency used in Frequency Hopping in the received burst to output an estimated result, and in which is further provided, instead of the interval data retransmission processing section in the second transmitting/receiving apparatus, an each-Hopping-Frequency data retransmission section which, based on the received quality information for each carrier frequency transmitted from the first transmitting/receiving apparatus, retransmits on the sub-timeslot data transmitted with the carrier frequency providing a poor received quality. It is thereby possible to measure the received quality for each carrier frequency used in Frequency Hopping and to retransmit on the sub-timeslot only data transmitted with the frequency providing a poor quality.

In the radio communication system of the present invention, in the above configuration, an each-Hopping-Frequency average received power measuring section is provided as the each-Hopping-Frequency received quality estimating section. It is thereby possible to measure the average received signal strength for each interval of each carrier frequency used in Frequency Hopping.

In the radio communication system of the present invention, in the above configuration, Frequency Hopping is not used in transmitting sub-timeslots.

As described above, according to the present invention, data which is deleted by puncture in transmission-coding and/or which is of a portion with a poor communication quality is transmitted using a sub-timeslot for communication quality improvement, and the receiving section uses the sub-timeslot signal, whereby it is possible to improve the communication quality while suppressing the increase in the redundancy of communication data amount to a small amount.

The present invention is not limited to the above described embodiments, and various variations and modifications may be possible without departing from the scope of the present invention.

This application is based on the Japanese Patent Application No.2000-184183 filed on June 20, 2000, entire content of which is expressly incorporated by reference herein.

## Claims

1. A radio communication system in which a first apparatus and a second apparatus perform a radio communication therebetween, said first apparatus comprising:
means (1012) for storing data to be transmitted; and
means (1013) for transmitting the data on a main-timeslot, while transmitting part of the data stored on a sub-timeslot different from the main-timeslot, and said second apparatus comprising:
means (1022) for detecting an error on the data transmitted on the main-timeslot; and
means (1024) for outputting the data as received data when the error is not detected on the data, while outputting, as received data, data obtained by using another data transmitted on the sub-timeslot and the data transmitted on the main-timeslot when the error is detected on the data.

2. The radio communication system according to claim 1, wherein data to be transmitted on the main-timeslot is subjected to puncture processing in coding, and another data to be transmitted on the sub-timeslot is a whole or part of the data deleted by the puncture processing.

3. The radio communication system according to claim 1, wherein said second apparatus further comprises means for estimating a received quality on data, and means for transmitting a result of an estimation to said first apparatus, and based on the result of the estimation, said first apparatus transmits on the sub-timeslot data of a portion providing a poor received quality in said second apparatus.

4. The radio communication system according to claim 1, wherein modulation on data is an M-ary modulation scheme, and said first apparatus transmits on the sub-timeslot data assigned to a bit tending to be erroneous in the M-ary modulation scheme.

5. The radio communication system according to claim 4, where a modulation scheme on data to be transmitted on the main-timeslot is different from a modulation scheme on another data to be transmitted on the sub-timeslot.

6. The radio communication system according to claim 1, wherein the another data to be transmitted on the sub-timeslot is assigned to one time slot with data to be transmitted to another user.

7. The radio communication system according to claim 1, wherein only when a traffic amount of the system is small, transmission using the sub-timeslot is performed.

8. The radio communication system according to claim 2, wherein corresponding to a communication quality, a puncture rate in the puncture processing in coding and a modulation scheme used in transmitting the sub-timeslot are controlled while being adaptively switched.

9. The radio communication system according to claim 1, wherein a timeslot with a new burst length is composed by combining portions corresponding to the main-timeslot and to the previous sub-timeslot.

10. A radio communication system in which a first apparatus and a second apparatus perform a radio communication therebetween, said first apparatus comprising:
means for storing data to be transmitted; and
means for transmitting the data on a main-timeslot, while transmitting part of the data stored on a sub-timeslot different from the main-timeslot, and said second apparatus comprising:
means for outputting, as received data, data obtained by using another data transmitted on the sub-timeslot and the data transmitted on the main-timeslot.

11. A radio communication system in which a first apparatus and a second apparatus perform a radio communication therebetween, said second apparatus comprising:
means (6022) for estimating a received quality on data;
means for transmitting a result of an estimation to said first apparatus; and
means (3026) for outputting, as received data, data obtained by using data transmitted on a sub-timeslot and data transmitted on a main-timeslot, and said first apparatus comprising:
means (3013) for storing data to be transmitted;
means (6011) for transmitting the data on the main-timeslot by Frequency Hopping; and
means for transmitting, based on the result of the estimation, data of a portion providing a poor received quality in said second apparatus on the sub-timeslot.
